(19) **Europäisches Patentamt / European Patent Office / Office européen des brevets**

(11) **EP 2 213 116 B1**

(12) **FASCICULE DE BREVET EUROPEEN**

(45) Date de publication et mention de la délivrance du brevet:
**21.03.2012 Bulletin 2012/12**

(21) Numéro de dépôt: **08835389.1**

(22) Date de dépôt: **02.10.2008**

(51) Int Cl.:
*G01S 3/38* *(2006.01)*    *H04W 16/28* *(2009.01)*

(86) Numéro de dépôt international:
**PCT/EP2008/063252**

(87) Numéro de publication internationale:
**WO 2009/043913 (09.04.2009 Gazette 2009/15)**

(54) **PROCEDE DE PILOTAGE D'ANTENNES INTELLIGENTES AU SEIN D'UN RESEAU DE COMMUNICATION**

VERFAHREN ZUR ANSTEUERUNG VON INTELLIGENTEN ANTENNEN IN EINEM KOMMUNIKATIONSNETZ

METHOD FOR DRIVING SMART ANTENNAS IN A COMMUNICATION NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **05.10.2007 FR 0707009**

(43) Date de publication de la demande:
**04.08.2010 Bulletin 2010/31**

(73) Titulaire: **THALES**
**92200 Neuilly-sur-Seine (FR)**

(72) Inventeurs:
• **HETHUIN, Serge**
  **F-92400 Courbevoie (FR)**
• **DUPREZ, Adrien**
  **F-75017 Paris (FR)**

(74) Mandataire: **Dudouit, Isabelle**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-2005/120091    WO-A-2006/034194**
**US-A1- 2005 215 261**

• **"Sujet de thèse FESA"[Online] 30 avril 2007 (2007-04-30), XP002484299 France Extrait de l'Internet: URL:http://hipercom.inria.fr/Public/ OffreC ifreFESA/> [extrait le 2008-06-11]**

**Description**

L'invention concerne notamment le pilotage d'antennes intelligentes dénommées par suite antennes FESA pour Fast Electronically Steerable Antenna.

Ces antennes dites intelligentes sont caractérisées par un lobe très directif orientable dans une direction donnée dans un temps très court (quelques centaines de nanosecondes). Elles sont utilisées, par exemple, dans les mobiles du type véhicules, bateaux, aéronefs pour lesquels la mise en oeuvre d'antennes à lobe directif à pointage dynamique est primordiale.

La mise en oeuvre de telles antennes pour des points fixes peut aussi représenter un avantage, pour se passer d'un pointage manuel, par exemple.

La présente invention concerne aussi un procédé permettant d'utiliser les antennes intelligentes dans un système de communications sans fil.

Ces dernières années, d'importants progrès ont été réalisés dans le domaine des antennes afin d'améliorer le bilan de liaison et leur portée. L'art antérieur décrit différentes techniques permettant de répondre à cette demande.

Grâce aux techniques de modulations et codages canal, les débits de communication ont été nettement augmentés par les progrès réalisés sur la densité d'informations transmise. Par exemple, des techniques de modulations et de démodulations permettent de transporter 6 bits par symbole de modulation (64QAM en WiMAX). Les recherches sur le codage canal ont été très fructueuses, par exemple dans les turbo-codes. Ces codes correcteurs d'erreur permettent de s'approcher bien plus de la limite de Shannon. Cependant, dans sa Théorie de l'information, Shannon met en évidence que la puissance radio fréquence RF et la bande passante fixent une limite supérieure à la capacité d'un lien de communication :

$$C = B * log2 (1 + S/N),$$

avec C = capacité du canal (bits/s), B = bande passante du canal (Hz), S = puissance du signal (watts), N = puissance de bruit (watts)

Il existe aussi, dans certains types d'application (notamment LOS : Line Of Sight), des techniques permettant le positionnement précis d'aériens directifs. Le placement de ces aériens est principalement manuel, même aidé par des outils de mesure de puissance radio ou des outils de géo-positionnement (GPS abrégé anglo-saxon pour Global Positioning System). Cette approche est fastidieuse, statique et coûteuse. Même motorisé, le pointage des antennes est une procédure coûteuse et peu rapide.

On trouve aussi des techniques de relayage. Certains protocoles permettent que la communication soit relayée lorsqu'une route directe n'est pas praticable (route inexistante par manque de portée ou la présence d'un obstacle, encombrement de trafic). Cependant tout relayage implique notamment :

➢ soit une perte en bande passante et une augmentation de la latence (en mono-radio),
➢ soit un maintien de la bande passante et de la latence au prix de deux radios (et non d'une seule),

Afin d'améliorer les débits, différentes techniques de traitement d'antennes ont aussi été développées dont certaines sont rappelées ci-après.

**Diversité STC**

Dans le domaine des transmissions radio, les techniques de diversité sont souvent utilisées pour contrer le phénomène de propagation par trajets multiples qui provoquent des atténuations (en anglo-saxon « fadings ») du signal transmis.

La diversité d'antennes (plusieurs antennes à l'émission et/ou à la réception) - dite diversité d'espace- est la plus communément utilisée. Le concept de diversité spatiale est le suivant : en présence de fading aléatoire dû à une propagation en multi-trajets, le rapport signal à bruit est nettement amélioré par combinaison des signaux reçus sur les éléments décorrélés de l'antenne.

On peut également citer :

• la diversité temporelle qui repose sur la transmission du même signal sur deux canaux différents mais avec un léger décalage dans le temps,
• la diversité de fréquence, d'angles d'arrivée ou de polarisation, la diversité par combinaison de multi-trajets basée sur le principe de l'étalement de spectre,

- la diversité par codage spatio-temporel, utilisée dans les techniques MIMO acronyme anglo-saxon de multiple Input Multiple output.

**MIMO (Multiple Input Multiple Output)**

Le MIMO exploite la diversité de chemins électromagnétique en milieu riche en multi-trajets pour augmenter les débits. Le MIMO n'est pas efficace en LOS (car pas de multi-trajets).

**La formation de faisceau électromagnétique ou en anglo-saxon Beamforming (analogique/numérique)**

La technique du beamforming consiste à former un faisceau électromagnétique dans une direction donnée à partir des émissions, pondérées en phase et en amplitude, de plusieurs antennes. La norme IEEE 802.16 utilise le terme AAS (Adaptive Antenna System) pour désigner la technologie Beamforming. Le terme « Smart Antenna », ayant la même signification, est également utilisé dans la littérature. Le standard 802.16e concentre (pour des raisons de coût de matériel pour l'abonné) dans la mesure du possible l'intelligence et la complexité au niveau de la station de base. Cependant, pour améliorer la performance de l'AAS, le 802.16e définit des messages/procédures additionnels entre la station de base BS et la station mobile MS.
Les gains comparés d'un Beamforming à N voies avec une antenne classique sont:

- pour le sens montant : 10*log(N) (gain BF)
- pour le sens descendant : 20*log(N) (gain BF et addition des puissances de chaque antenne).

La formation d'un faisceau électromagnétique offre en outre une moindre susceptibilité aux émissions externes pouvant interférer. Certains algorithmes de beamforming peuvent même faire mieux que d'accentuer le gain de réception dans une direction donnée en créant des « zéros » dans le diagramme de réception, c'est-à-dire mettre un gain minimal dans la direction de l'interférence. Si elle est performante, cette technique présente néanmoins certains inconvénients. Les circuits ou « hardware » pour assurer la fonction de beamforming sont volumineux dons la mesure où ils nécessitent plusieurs chaînes radio.

**Techniques de pilotage d'antennes directives**

Les techniques de pilotages d'antennes directives développées jusqu'ici visent des temps de commutation de faisceaux de l'ordre de la seconde, voire de la centaine de millisecondes. Ces techniques mettent en oeuvre des procédures de balayage ou « scanning » et d'intégration sur une période relativement grande et donc confortable pour obtenir des statistiques du signal et elles sont donc incompatibles avec les techniques d'asservissement rapide.
Les techniques de traitement d'antennes comportent des limites. Le beamforming et le MIMO nécessitent plusieurs voies d'émission/réception, ce qui peut les rendre encombrants et coûteux. L'intérêt du MIMO est conditionné à l'environnement dans lequel il est utilisé. L'augmentation de débit autorisée est directement proportionnel au nombre d'antennes qui doivent être espacées entre elles de quelques longueurs d'onde.
Une autre voie a été de développer de nouvelles antennes. Parmi ces dernières, on trouve les antennes intelligentes, dénommées FESA pour Fast Electronically Steerable Antenna, se caractérisant par : un très haut gain, un encombrement bien moindre que celui du beamforming (et du MIMO), des temps de commutation ultra-courts. De telles antennes n'ont plus qu'une couverture angulaire partielle et non onmidirectionnelle dans son fonctionnement normal ou nominal.
L'enseignement technique du brevet US 2005/215261 concerne un algorithme de pointage d'antenne qui sélectionne, dans un premier temps un faisceau d'antenne, puis l'algorithme de pointage va périodiquement contrôler une valeur de lien radio générée par le faisceau d'antenne sélectionné, dans le cas où la valeur tomberait en dessous d'une valeur seuil, alors l'algorithme de pointage changerait de direction.
L'objet de l'invention concerne notamment un procédé permettant de piloter, à chaque instant, la direction de ce faisceau (issu d'une antenne FESA), en tenant compte de la mobilité des différentes stations participant à la communication, de la gestion d'énergie (mode sommeil/inactif plus connu sous le terme anglo-saxon « sleep/idle ») et des phases critiques d'entrée dans le réseau et de transfert d'appel entre les cellules désigné par le terme anglo-saxon « handover ».
Par la suite, on considère qu'une antenne FESA peut être schématisée et se comporter comme un faisceau directif pointable par un bus de N bits, ces N (8 par exemple) bits définissant une direction de l'axe central de l'antenne dans un plan 2D du type : $D = k * 360°/(2^N)$ avec : D la direction de pointage par rapport à une position de référence, $2^N$ : le nombre de positions possibles sur 360°, K : la valeur du bus de N bits.
L'objet de l'invention adresse, notamment, les procédures de mise en oeuvre des antennes FESA sur les terminaux (abonnés, utilisateurs, station de base...) dans un contexte, par exemple, WiMAX Mobile (acronyme anglo-saxon pour *Worldwide Interoperability for Microwave Access*), afin notamment :

- d'arriver à définir des procédures applicables dans un contexte WiMAX Mobile sans remise en cause du standard déjà défini, ou tout autre contexte équivalent,
- de rendre compatible les terminaux ainsi modifiés des stations de base existantes, il n'y a pas de modifications à apporter sur les stations de base.

L'objet de la présente invention concerne un procédé de mise en oeuvre d'une antenne intelligente directive FESA au sein d'un réseau utilisant un protocole d'accès déterministe, une ou plusieurs stations mobiles MS et au moins une station de base BS, les données transmises étant incluses dans une trame de données, caractérisé en ce qu'il comporte en combinaison au moins les étapes suivantes :

lors de l'entrée d'une station mobile dans le réseau :

- Etape de synchronisation d'une station mobile MS équipée d'une antenne intelligente FESA ou Fast Electronically Steerable Antenna sur une émission de la station de base par changement de faisceau sur une durée au moins égale à une trame de données afin de pointer le faisceau directif en direction de la station de base BS pour obtenir la meilleure réception du signal,
- Etape de suivi de synchronisation de la station mobile sur l'émission de la station de base, et mise en oeuvre d'un algorithme de poursuite de pointage afin de conserver la meilleure réception du signal,
- Etape de détermination des paramètres de définition du lien descendant ou du lien montant par décodage des messages de signalisation contenus dans le message émis par la station de base,
- Déclenchement d'une procédure d'entrée dans le réseau.

Une fois la station mobile MS entrée dans le réseau :

- La sélection du nouveau faisceau étant basée sur un mécanisme avec hystérésis utilisant un filtrage linéaire précédé d'une étape de réjection par sauts ou utilisant directement un filtre non linéaire.

L'étape de synchronisation est, par exemple, effectuée avec une antenne FESA configurée en couverture omnidirectionnelle disposée du côté station mobile MS si le signal est suffisant.

L'étape de suivi de synchronisation comporte une étape de poursuite de pointage, après l'étape de synchronisation de la station mobile, le faisceau étant dirigé dans des directions successives ou voisines à l'intérieur de la trame et de trame en trame afin de conserver à tout instant la direction optimale. L'invention concerne aussi un dispositif de pilotage d'une antenne intelligente FESA ou Fast Electronically Steerable Antenna dans un réseau de communication comprenant une interface réseau, une couche d'accès MAC ou Medium Access Control, une interface énergie et un module radio, caractérisé en ce que la couche d'accès MAC comporte un module de pilotage FESA en liaison avec l'antenne FESA, un module de pilotage radio.

D'autres caractéristiques et avantages de la présente invention apparaîtront mieux à la lecture de la description qui suit d'un exemple de réalisation donné à titre illustratif et nullement limitatif, annexé des figures qui représentent :

- La figure 1, un exemple de différentes configurations de réception de la station de base par la station mobile,
- La figure 2, la représentation de quelques faisceaux possibles de l'antenne FESA,
- La figure 3, la représentation d'un synoptique de pilotage de l'antenne FESA,
- La figure 4, une topologie PMP, liaisons point à multipoint,
- Les figures 5, 6 et 7, respectivement pour une station mobile équipée d'une antenne FESA, le meilleur gain d'antenne de l'antenne FESA comparé à un diagramme omnidirectionnel, la recherche de la meilleure direction de faisceau et les lobes d'antennes respectifs d'une station de base d'une part et d'une station mobile équipée d'une antenne FESA d'autre part,
- La figure 8, le schéma matériel d'une station mobile équipée d'une antenne FESA,
- La figure 9, une approche par largeurs de faisceau décroissantes (respectivement gains d'antenne croissants),
- La figure 10, une représentation des lobes d'antennes de la station de base équipée d'une antenne omnidirectionnelle et de la station mobile équipée d'une antenne FESA,
- La figure 11, une représentation des différentes positions de couverture radio de la station de base équipée d'une antenne fonctionnant en Beamforming dans le cas d'une station mobile équipée d'une antenne

FESA,

- La figure 12, le résultat d'un processus d'anticipation d'une commutation de la direction de pointage principal,
- La figure 13, un schéma d'une station de base équipée d'une antenne FESA et d'une antenne omnidirectionnelle,
- La figure 14, un réseau 802.16 comprenant des stations relais RS,
- La figure 15, des faisceaux successifs de la FESA en station relais, la station de base et la station mobile étant omnidirectionnelle, et
- La figure 16 des faisceaux successifs de la FESA en station de base BS, station relais RS et station mobile MS.

Afin de mieux faire comprendre le principe mis en oeuvre par le procédé selon l'invention, la description qui suit est donnée dans le cas d'un réseau WiMax, à titre illustratif et nullement limitatif. Les procédures décrites dans le cadre de ce brevet sont définies pour un système 802.16, mais sont généralisables à tout système basé sur un protocole d'accès déterministe.

La solution proposée de procédures FESA met en oeuvre, par exemple, les principes suivants :

- L'utilisation d'une Base civile 802.16d/e,
- La réalisation de chaque noeud, correspond à une station mobile, à partir de matériel 802.16 du commerce (composants hardware type ASIC (*Application-Specific Integrated Circuit*), couche PHY et modules logiciels),
- Une station mobile équipée d'une antenne de type FESA doit pouvoir fonctionner avec une station de base BS, équipée ou non du système adaptatif d'antenne AAS,
- Les noeuds (station de base BS, station relais RS ou station mobile MS) dotés d'une capacité FESA s'intègrent dans un réseau WiMAX (acronyme anglo-saxon pour *Worldwide Interoperability for Microwave Access*) sans aucun impact sur les autres noeuds du réseau,
- Les intervalles de temps inutiles pour la transmission, sont utilisés pour connaître la direction d'émission (utiles pour entrée dans le réseau, poursuite ou « tracking » et appel entre les cellules ou « handover »).

Le procédé selon l'invention résout notamment les problèmes suivants :

- L'entrée dans le réseau d'une station mobile, ce qui conduit :

    o à la synchronisation avec la station de base,
    o au Décodage des messages de gestion,
    o aux Procédures d'entrée dans le réseau (autorisation, ranging etc...)

- La poursuite ou « Tracking » de la station de base BS (en fonction de la mobilité de la station MS),
- L' ensemble des opérations mises en oeuvre permettant qu'une station mobile puisse changer de cellule sans interruption de service ou « Handover » en anglo-saxon,
- Le mode « Sleep/idle ».

Le premier exemple de mise en oeuvre du procédé selon l'invention concerne une station mobile équipée d'une antenne de type FESA dans un réseau PMP, c'est-à-dire où les liaisons sont des liaisons point-multipoint.
La station de base participant au réseau peut être soit non équipée du système d'adaptation automatique ou non-AAS, soit équipée d'un système antennaire adaptatif, comme défini dans la norme 802.16d/e.

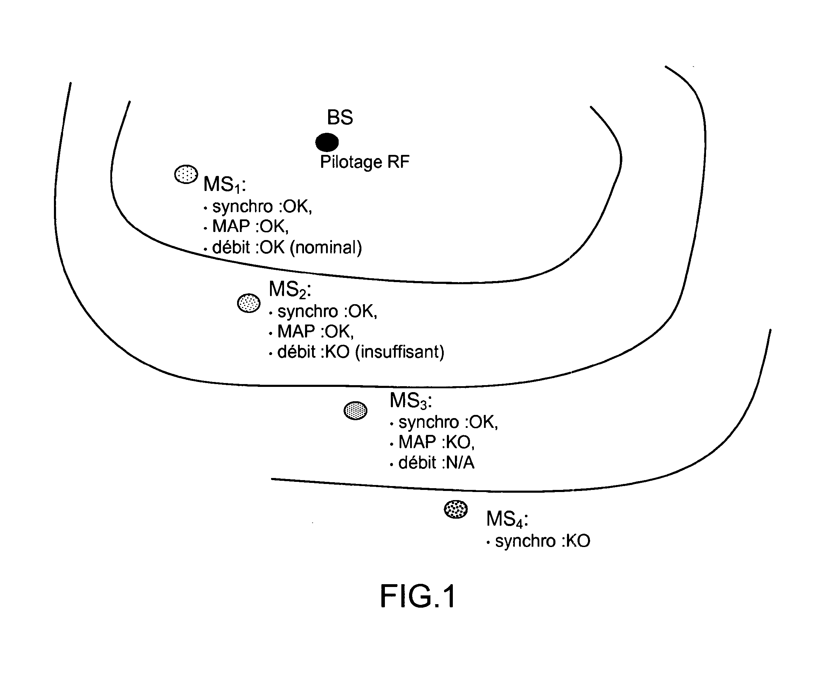

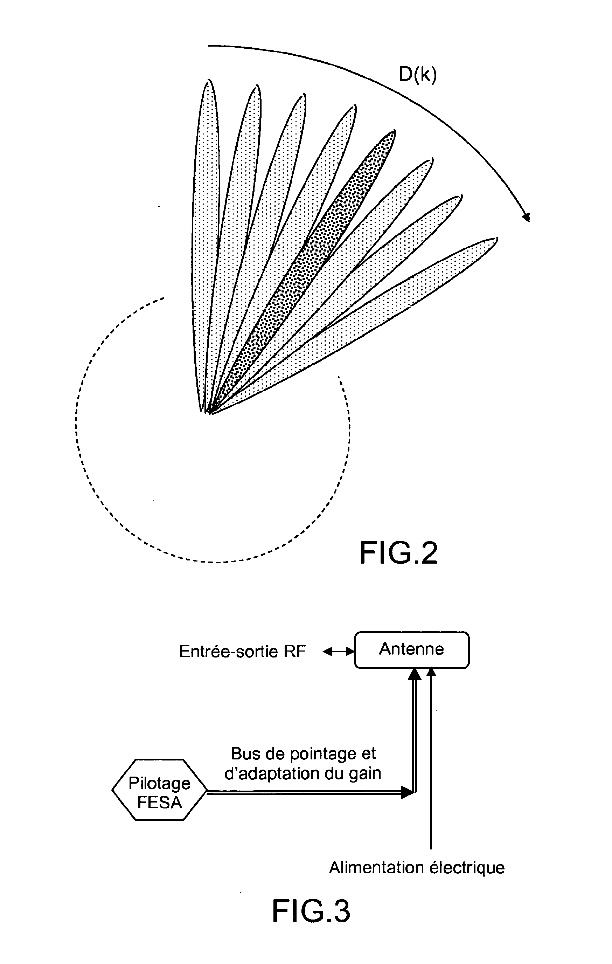

La figure 1 représente différentes configurations de réception d'une station de base par la station mobile. Pour une station mobile équipée d'une station FESA, dont quelques faisceaux émis par cette dernière sont représentés à la figure 2, où D(k) correspond aux différentes valeurs de pointage du faisceau, les stations mobiles MS1 et MS2 (figure 1) voient une amélioration du rapport signal sur bruit SNR, et donc une augmentation du débit (passage à des modulations plus efficaces) pour les MS1 et une possibilité de transmettre à un débit minimum (modulation minimale accessible) pour les MS2. Les stations mobiles MS3 voient la possibilité de décoder les messages de signalisation DL-MAP de la station et les MS4 voient la possibilité de se synchroniser (les stations MS4 ne peuvent se synchroniser si elles ne sont pas équipées d'une antenne FESA).
La figure 2 schématise plusieurs des faisceaux émis par l'antenne FESA selon une direction de pointage donnée. La direction des faisceaux émis varie avec l'indice k.
La figure 3 schématise un exemple de pilotage d'une antenne FESA. La mise en oeuvre peut se faire, par exemple, selon deux moyens décrits ci-après.

Une première technique consiste à utiliser un bus parallèle. L'avantage en résultant est la rapidité de commande. La direction de pointage et le gain d'antenne sont appliqués sans délai dès que l'information change sur le bus parallèle. En revanche, ce bus parallèle nécessite un câble avec autant de conducteurs que de bits définis dans le bus.

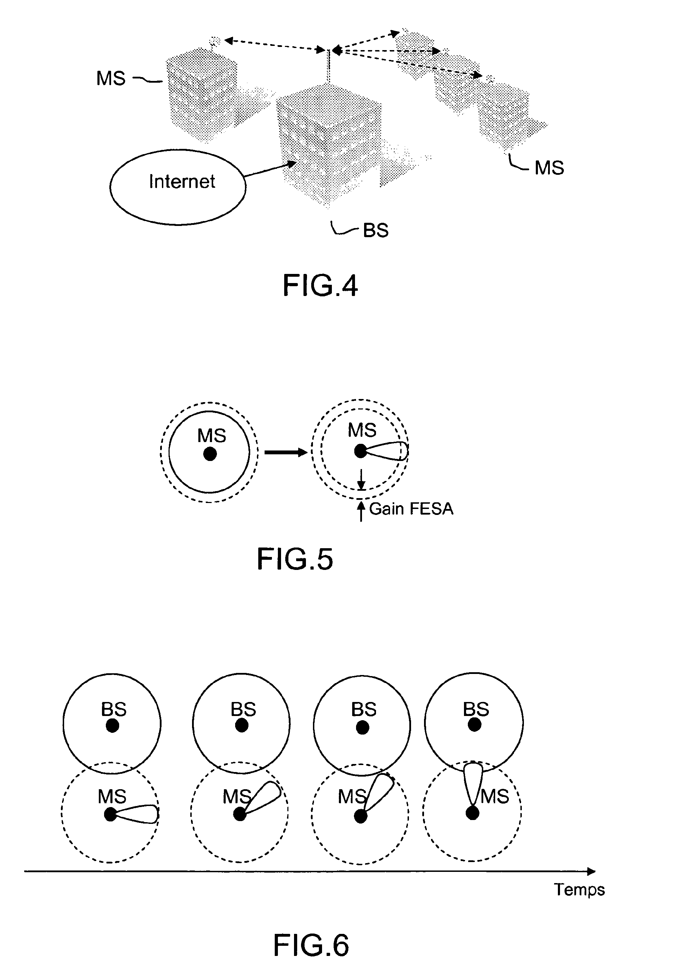

La seconde technique repose sur une liaison série qui présente l'avantage de minimiser le nombre de conducteurs du bus de contrôle entre le modem radio et l'antenne : un conducteur pour les informations et un conducteur pour le signal de chargement. L'inconvénient réside alors dans l'architecture des circuits nécessaires (registre série-parallèle) dans l'antenne pour mémoriser les informations sur déclenchement du signal de chargement mais aussi sur le délai à consentir entre l'envoi de la commande et l'application réelle des paramètres. La figure 4 représente un exemple de topologie pour des liaisons point à multipoint comprenant une station de base BS et plusieurs stations mobiles MS équipées d'une antenne FESA qui communiquent entre elles en appliquant la procédure selon l'invention, la communication s'appuyant par exemple sur Internet.

La figure 5 représente l'augmentation du gain d'antenne et la réduction associée du lobe de l'antenne apportés par l'utilisation d'une antenne FESA sur une station mobile dans cet exemple. Le cas d'une station de base équipée d'une antenne FESA est évoqué par la suite. La figure 6 représente dans un axe temporel, une station mobile MS équipée d'une antenne FESA en recherche du meilleur faisceau.

La station mobile MS étant équipée d'au moins une antenne de type FESA, cette dernière présente comme avantage de faciliter la synchronisation de la station mobile MS sur l'émission de la station de base (procédure descendante ou Downlink) par extension du gain d'antenne.

Les étapes mises en oeuvre par le procédé sont, par exemple, les suivantes : on concentre l'énergie dans un faisceau étroit émis par l'antenne FESA et on considère la sous-trame descendante ;

Initialisation de la station mobile abonnée, recherche d'une station de base

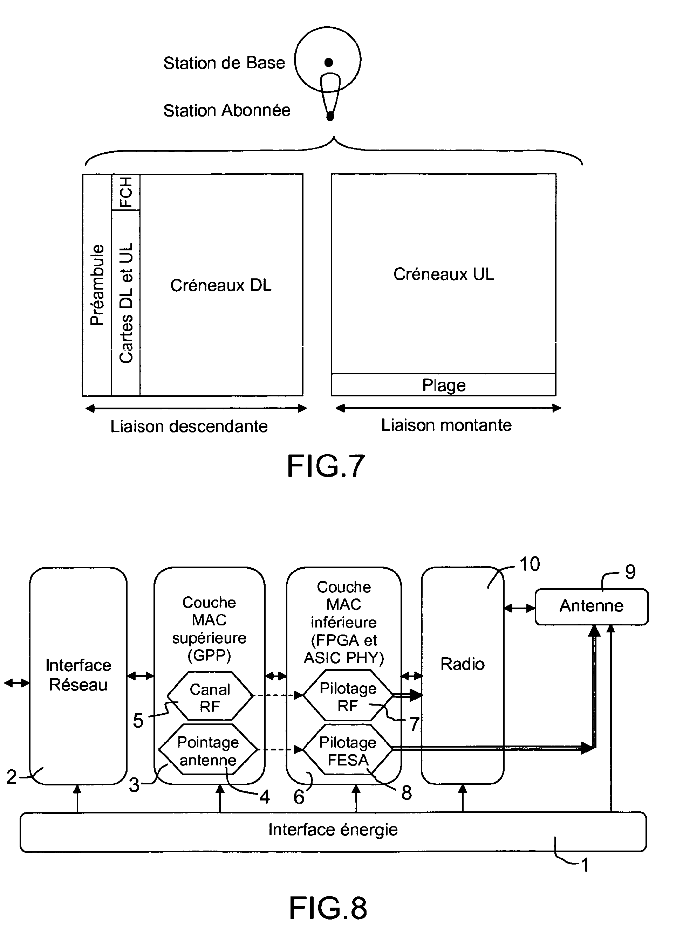

- Le procédé recherche le meilleur faisceau (faisceau directif de la MS qui cherche l'énergie de la BS) par changement de pointage du faisceau à chaque trame (trame de taille maximale par défaut), jusqu'à pointer le faisceau en direction de la station de base (ou dans la direction permettant la meilleure réception de signal en provenance de la station de base). La figure 6 représente cette étape de recherche du meilleur pointage du faisceau électromagnétique en station mobile. Un processeur faisant partie du dispositif (voir figure 8) permet de faire varier l'angle d'émission du faisceau de l'antenne FESA de la station mobile lors de sa recherche d'une station de base BS.

- La figure 7 représente le recouvrement des lobes d'antennes omnidirectionnel de la station de base BS et du faisceau d'une station mobile équipée d'une antenne FESA autorisant ainsi la communication entre les deux. La structure de trame OFDMA associée, pour la liaison descendante (downlink) et pour la liaison montante (uplink) est aussi représentée. Avantageusement, le gain d'antenne ainsi disponible sur la MS permet d'améliorer le bilan de liaison donc le débit ou encore, à même rapport signal à bruit, il permet de démarrer un processus de connexion avec des portées plus grandes.

- La station mobile MS ayant trouvé la station de base avec qui elle peut dialoguer, l'étape suivante est l'étape de synchronisation de la station mobile MS sur l'émission de la station de base. Ceci correspond à l'accroche du préambule « Downlink Preamble ». L'étape de synchronisation est effectuée selon les principes connus de l'Homme du métier.

- On obtient ensuite des paramètres de définition de liaison sens descendant ou « Downlink » par décodage des messages de signalisation (messages FCH qui décrit la composition de la trame, DL-MAP message MAC 802.16 qui décrit l'allocation de la bande passante et DCD descripteur de canal descendant relatif à la description du canal radio. • Le procédé met ensuite en oeuvre, par exemple, une procédure 802.16 classique, c'est-à-dire d'entrée dans le réseau.

- Si l'entrée dans le réseau échoue (e.g. réseau « étranger »), on fait varier l'angle d'émission du faisceau et on réitère les étapes précédemment décrites jusqu'à la synchronisation, l'obtention des paramètres de définition du Downlink et la procédure d'entrée dans le réseau.

La figure 8 présente un schéma matériel possible pour une station mobile MS équipée d'une FESA dans le cas du protocole 802.16. La couche MAC pilote la direction de l'antenne par sélection d'un faisceau.

Sur cette figure sont représentées : une interface énergie 1 alimentant les différents éléments, une interface réseau 2, en liaison avec la couche supérieure 3 ou Upper Mac qui comprend des moyens 4 pour piloter le pointage d'antenne et les éléments 5 du canal radio fréquence dans lequel travaillent les différents éléments. La fonction pointage de l'antenne est par exemple effectuée au moyen d'un processeur qui permet notamment d'exécuter différents calculs, par exemple des moyennes, ou d'autres types de calcul dont certains exemples seront donnés ci-après.

La couche inférieure 6 est en liaison avec la couche inférieure d'accès au milieu ou lower MAC qui comprend des moyens de pilotage radio fréquence 7 et le dispositif de pilotage 8 de l'antenne FESA, ce dernier étant en liaison directe avec l'antenne 9. Au niveau de la couche inférieure, on utilise des FPGA (field Programmable Gate Array) ou encore des circuits intégrés ou ASIC (application-specific integrated circuit) permettant notamment d'exécuter des fonctions temps réel, tels que des séquencements de l'antenne, etc. Une couche radio 10 est en liaison avec l'antenne 9 FESA.

La procédure d'initialisation et d'entrée dans le réseau étant terminée, le procédé peut dérouler la phase de poursuite ou tracking.

**Poursuite ou Tracking**

La poursuite ou « tracking » vise à assurer que le faisceau sélectionné de l'antenne FESA de la station mobile MS pour communiquer avec la station de base est à tout instant dirigé de façon optimale.

Pour parvenir à ce résultat, l'algorithme de poursuite « tracking » mesure des paramètres significatifs pour plusieurs directions autour de la direction nominale selon une constante de temps pendant laquelle on intègre le signal, compare les résultats obtenus et décide de la direction poursuivie selon un traitement permettant notamment de s'affranchir d'éventuels problèmes de variation dans la puissance de l'émission momentanée.

Les antennes FESA peuvent fonctionner soit avec des noeuds radios équipés d'un GPS en utilisant les informations GPS disponibles, soit avec des noeuds radio en étant totalement dépourvus.

**Avec GPS**

Dans le cas où des informations GPS sont disponibles (coordonnées émetteur et récepteur), alors le noeud ou station mobile équipée d'une antenne FESA peut déterminer la meilleure direction théorique et s'y caler. Une fois positionnée, une procédure effectue différentes mesures pour vérifier que la meilleure direction théorique pour le faisceau antennaire est aussi la meilleure en pratique. Pour vérifier que la meilleure direction a été trouvée, les étapes suivantes sont par exemple exécutées: une constatation en premier que la connexion peut s'effectuer, puis un test de la direction et éventuellement des directions directement adjacentes dans les périodes de lien descendant du canal de diffusion (downlink broadcast) de la station de base BS avec une moyenne sur plusieurs trames sur une position si nécessaire. La fonction pour exécuter la moyenne est située dans la couche MAC supérieure.

**Sans GPS**

Sans GPS, le faisceau de l'antenne FESA est positionné sur une direction par défaut (e.g. la dernière utilisée si le processus de synchronisation est encore actif) cette information est mémorisée dans la couche supérieure MAC. Puis la direction du faisceau évolue en fonction de l'algorithme de poursuite.

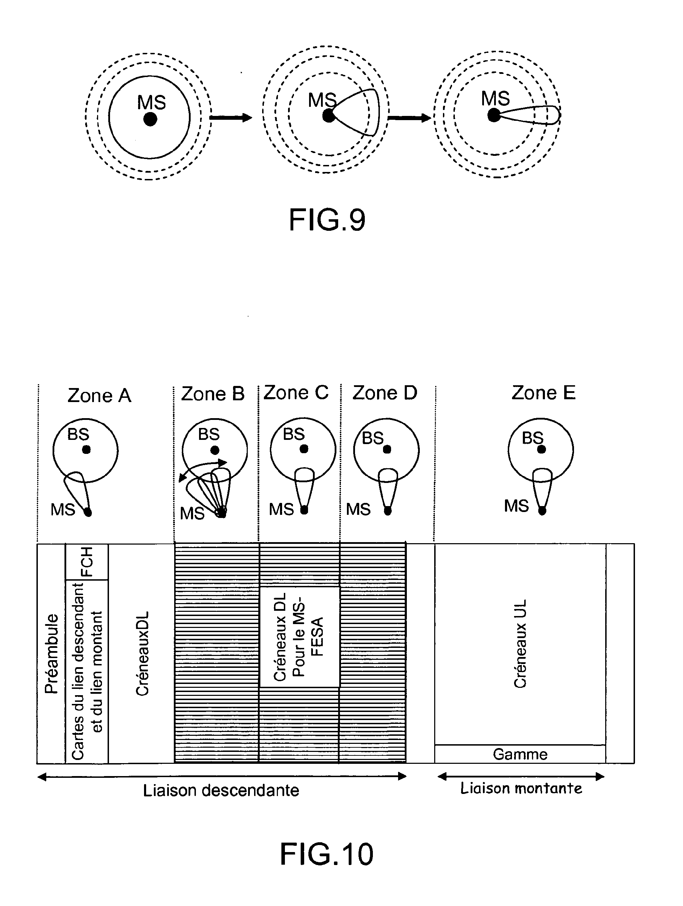

Une approche complémentaire consiste à procéder en faisant varier la largeur du faisceau émis par l'antenne FESA, de manière incrémentale, comme il est représenté en figure 9. Pour prendre en compte des applications de mobilité conduisant à des changements de faisceaux plus rapides, le faisceau peut être élargi à la fin de chaque trame, puis affiné par le suivi ou tracking en début de trame suivante (à condition que le rapport signal à bruit SNR soit suffisant). Le raffinement pour le meilleur faisceau peut aussi se faire dans la sous-trame downlink, alors que la BS ne s'adresse pas à la MS-FESA. Ceci est représenté en figure 10.

Si le mobile MS est proche de la BS, les variations de pointage peuvent être rapides et le suivi de pointage peut devenir une difficulté. Les largeurs de lobe (gains d'antenne) seront donc conservées modérées, d'autant que la courte distance entre BS et MS fait que le bilan de liaison est suffisant avec un diagramme omnidirectionnel. A l'inverse, si le mobile s'écarte de la BS, alors il peut devenir intéressant d'augmenter le gain d'antenne en affinant le faisceau et à supporter l'augmentation de distance entre BS et MS grâce à la directivité de l'antenne FESA. Largeur de faisceau et pointage du faisceau sont deux paramètres différents qui sont gérés de façon complémentaire.

Dans l'exemple de la figure 10, la Ms-FESA a son faisceau mal ajusté par rapport à la BS. Ceci est dû à la mobilité. Cependant, la MS-FESA réussit (voir la zone A) à se synchroniser et à décoder les paramètres Downlink (messages FCH, DL-MAP, et DCD).

En zone A, toujours, la BS diffuse des informations à toutes les stations abonnées (Broadcast). En zone B, la MS-FESA concerné sait grâce au message FCH ou DL-MAP qu'elle dispose d'un temps déterminé sans avoir à capter d'informations dédiées de la part de la BS. Elle met ce temps à profit pour affiner son faisceau vers la BS. Cet affinement peut être terminé à la fin de la zone B, comme c'est le cas en figure 10. Sinon, elle pourrait interrompre cet affinement lors de la zone C et le reprendre en zone D.

Un mécanisme d'hystérésis est, par exemple, mis en oeuvre pour stabiliser le système, éviter ainsi les commutations trop rapides entre deux directions de faisceau.

**Détails sur l'algorithme de poursuite du pointage optimal :**

Par suite, une approche par filtrage linéaire du type $\alpha$-$\beta$ précédé éventuellement d'un algorithme de réjection non linéaire est décrite. La même approche pourrait être faite en utilisant un filtrage du type Kalman.

On imagine par suite des mesures d'énergie (RSSI) ou de SNR effectuées sur 3 directions de pointage contiguës avec une directivité (gain d'antenne ou largeur de lobe) donnée : direction nominale k et directions adjacentes k-1 et k+1.

Les mesures de RSSI ou de SNR dans la direction k au cours du temps dans une trame ou sur plusieurs trames à des instants réguliers (la même approche peut être décrite avec des instants d'échantillonnage irréguliers mais la formulation est beaucoup plus lourde) sont $m_k(nT)$. De même, dans la direction (k-1) aux instants $nT+T_{k-1}$ les mesures sont : $m_{k-1}(nT+T_{k-1})$. De même, les mesures dans la direction (k+1) aux instants $nT+T_{k+1}$ sont : $m_{k+1}(nT+T_{k+1})$. nT représente les instants de mesure dans la direction k, alors que $nT+T_{k-1}$ et $nT+T_{k+1}$ représentent les instants de mesure dans les directions respectives k-1 et k+1 ($T_{k-1}$ et $T_{k+1}$ sont des décalages par rapport aux instants nT).

Dans la direction k, le procédé utilise le filtre suivant :

$$MP_k(nT) = M_k(nT-T) + v_k(nT-T) * T$$

$$e_k(nT).= m_k(nT) - MP_k(nT)$$

$$M_k(nT) = MP_k(nT) + \alpha\, e_k(nT)$$

$$v_k(nT)= v_k(nT-T) + \beta\, e_k(nT)/T$$

avec :

MP : prédiction pour l'instant t
e : erreur entre mesure et prédiction à l'instant T
M : estimation à l'instant T
v : vitesse estimée d'évolution

Dans la direction k-1, on fait agir le filtre suivant :

$$MP_{k-1}(nT+T_{k-1}) = M_{k-1}(nT+T_{k-1}-T) + v_{k-1}(nT+T_{k-1}-T) * T$$

$$e_{k-1}(nT+T_{k-1}).= m_{k-1}(nT+T_{k-1}) - MP_{k-1}(nT+T_{k-1})$$

$$M_{k-1}(nT+T_{k-1}) = MP_{k-1}(nT+T_{k-1}) + \alpha\, e_{k-1}(nT+T_{k-1})$$

$$v_{k-1}(nT+T_{k-1})= v_{k-1}(nT+T_{k-1}-T) + \beta\, e_{k-1}(nT+T_{k-1})/T$$

Dans la direction k+1, on fait agir le filtre suivant :

$$MP_{k+1}(nT+T_{k+1}) = M_{k+1}(nT+T_{k+1}-T) + v_{k+1}(nT+T_{k+1}-T) * T$$

$$e_{k+1}(nT+T_{k+1}).= m_{k+1}(nT+T_{k+1}) - MP_{k+1}(nT+T_{k+1})$$

$$M_{k+1}(nT+T_{k+1}) = MP_{k+1}(nT+T_{k+1}) + \alpha\, e_{k+1}(nT+T_{k+1})$$

$$v_{k+1}(nT+T_{k+1}) = v_{k+1}(nT+T_{k+1}-T) + \beta\, e_{k+1}(nT+T_{k+1})/T$$

L'hystérésis consiste à comparer à chaque instant nT+delta (delta étant le majorant de $T_{k-1}$ et $T_{k+1}$) la valeur de $M_k(nT)$ avec $M_{k-1}(nT+T_{k-1})$ et $M_{k+1}(nT+T_{k+1})$. Si la valeur de $M_k(nT)$ est toujours supérieure de X1 dB à $M_{k-1}(nT+T_{k-1})$ et de $M_{k-1}(nT+T_{k+1})$ alors la valeur de k est conservée comme pointage optimal. Si l'une des valeurs $M_{k-1}(nT+T_{k-1})$ ou $M_{k+1}(nT+T_{k+1})$ est supérieure de X2 dB par rapport à $M_k(nT)$ alors la direction correspondante est prise comme direction de pointage optimal.

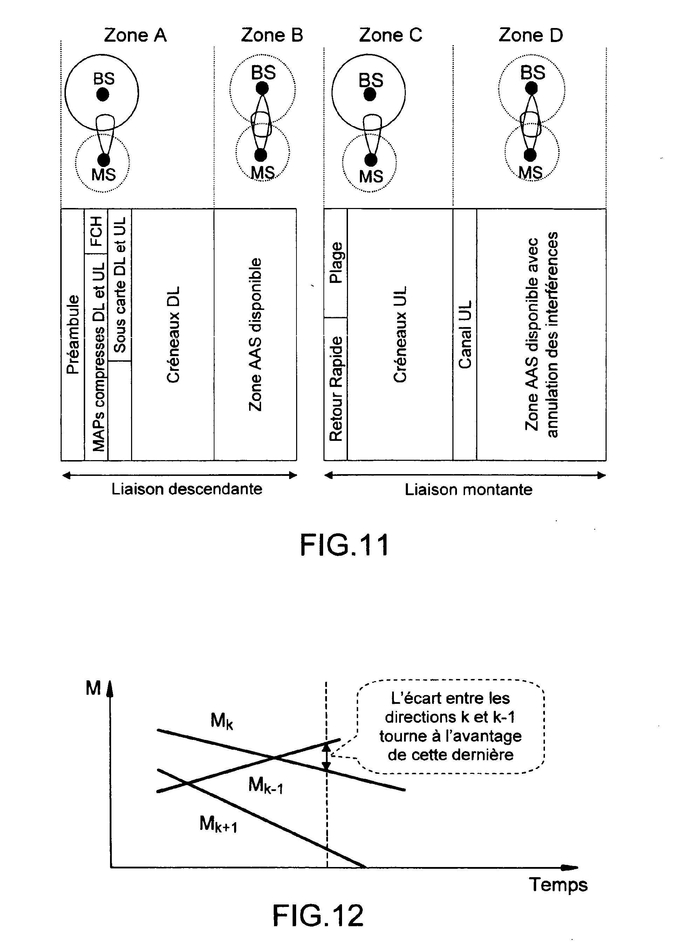

Les prédictions MP permettent de savoir et d'anticiper une commutation de la direction de pointage principal. En effet, les vitesses d'évolution permettent de calculer à l'avance de la direction de k-1 ou de k+1 laquelle des deux va prendre le relais. La tendance générale étant du type décrit en relation avec la figure 12, où l'écart entre les directions k et k-1 tourne à l'avantage de cette dernière. Si une radio est hors de portée ou en mode « sleep/idle », alors, en l'absence d'informations type GPS, le faisceau à la reprise est le dernier utilisé ou une phase d'acquisition du meilleur angle de pointage recommence.

Si une radio est en mode « idle », alors, en l'absence d'informations type GPS lui indiquant la BS la plus proche, à chaque rendez-vous périodique avec le groupe de « paging » (défini lors de l'entrée en mode « idle » tel que décrit par la norme WiMAX) le faisceau repris est le dernier utilisé mais précédé par une scrutation sur 360° pour confirmation de la meilleure direction vers la meilleure BS. Cette scrutation peut être effectuée quelques instants avant (dans les trames précédentes) le rendez-vous périodique avec le groupe de paging.

**Paramètres significatifs pour l'algorithme de poursuite**

L'algorithme de poursuite mis en oeuvre par le procédé peut se baser sur la méthode des moindres carrés, connue de l'Homme du métier mais aussi sur des techniques comme celle mentionnée plus haut basée sur du filtrage linéaire $\alpha$-$\beta$ avec estimation du pointage moyen et de la vitesse d'évolution de la direction de pointage suivi d'un algorithme de réjection non-linéaire des mesures instantanées trop écartées. Plusieurs critères peuvent être pris en compte, comme les statistiques de puissance (puissance reçue, rapport signal à bruit si disponible) ou les statistiques de codage canal.

A titre d'exemple, le procédé considère deux algorithmes de poursuite ou « tracking » :

**Exemple A : Critère d'optimisation de puissance reçue.**

Le critère de puissance est le plus simple à utiliser (mesure du RSSI abréviation anglo-saxonne de Received Signal Strength Indication). Il est indirectement lié à la robustesse de la communication.

La station mobile MS profite des temps dans la sous-trame lien descendant « downlink » où aucun créneau ou « burst » ne lui est destiné, c'est-à-dire qu'elle ne reçoit aucune information dédiée de la part de la station de base, pour mesurer les puissances reçues sur les autres directions du faisceau de son antenne FESA. Pratiquement, pour plusieurs valeurs d'angle du pointage de faisceau, elle détermine une puissance ou d'énergie reçue, puis elle peut effectuer la moyenne de toutes les valeurs de puissance.

Les calculs sont, par exemple, effectués dans le dispositif de pointage d'antenne situé dans la couche supérieure ou « Upper Mac ».

Ces mesures sont valides dans la mesure où la station de base BS est en émission aux instants mesurés c'est-à-dire que la BS s'intéresse aux autres MS, elle leur délivre leurs messages respectifs, la MS concernée n'ayant rien de particulier à recevoir pendant ces instants. Ceci est vérifié par la station mobile MS dans le message FCH (Frame Control Header) et DL-MAP cartes du lien descendant. La direction sélectionnée est, par exemple, celle dont la moyenne d'énergie reçue est maximale.

La procédure algorithmique détaillée, en considérant le pointage de l'antenne FESA de la station mobile MS obtenu sur la trame précédente N-1 et le diagramme omnidirectionnel sur l'antenne de la BS, est, par exemple, la suivante :

- Synchronisation de la station mobile MS sur la station de base BS en utilisant les étapes de synchronisation précédemment décrites,
- Lecture par la station mobile MS des messages FCH DL-MAP pour la connaissance de la structure d'accès en lien descendant « downlink »,
- Dans la phase créneaux de la liaison descendante ou « downlink bursts » de la séquence A, adaptation du pointage du faisceau de la MS vers la BS (à diagramme omni constant) par méthode de mesure de la puissance en prenant ou non en compte les statistiques du canal. La station de base adressant d'autres stations mobiles MS que celle qui cherche à s'accrocher, le temps pendant lequel la station de base ne s'adresse pas à une station mobile FESA est mis à profit par cette station mobile MS FESA pour affiner par des calculs effectués par exemple au niveau du dispositif de pilotage, le pointage de son pinceau vers la BS. Plusieurs stations mobiles MS FESA peuvent affiner leur faisceau en même temps (diagramme omni sur la BS).

**Exemple B : Combinaison de la puissance et du rapport signal/bruit ou SNR**

La valeur du SNR est un excellent critère car il est directement lié à la capacité de démodulation. Cependant, il suppose que la station mobile MS démodule des symboles. Cela signifie donc que la MS WiMAX est modifiée pour démoduler aussi des symboles qui ne lui sont pas destinés, et ce afin d'en déterminer le SNR. Les symboles acquis par la station mobile sont décodés afin de retrouver les données modulées puis déterminer la valeur du rapport signal sur bruit en exécutant des méthodes statistiques connues de l'Homme du métier. Cette méthode peut être plus longue que la précédente car elle nécessite d'attendre la durée d'un symbole. Cette méthode peut être couplée à l'utilisation des statistiques de codage canal.
La procédure algorithmique mise en oeuvre peut être la suivante, en considérant le pointage de l'antenne FESA sur MS obtenu sur la trame précédente et le diagramme omnidirectionnel sur l'antenne de la BS, est la suivante :

- Synchronisation de la MS sur la BS,
- Lecture par la MS des messages FCH DL-MAP pour la connaissance de la structure d'accès en downlink,
- Dans la phase « downlink bursts » de la séquence A (B sur Figure 11), adaptation du pointage du faisceau de la MS vers la BS (à diagramme omni constant) par méthode de mesure de la puissance et du SNR avec ou pas la prise en compte des statistiques du canal. La BS adressant d'autres MS, le temps pendant lequel elle ne s'adresse pas à une MS est mis à profit par cette MS pour affiner le pointage de son pinceau vers la BS. Plusieurs MS peuvent affiner leur faisceau en même temps (diagramme omni sur la BS).

**Handover**

Dans la norme 802.16e, les deux types principaux de « handover » sont définis de la manière suivante :

- Mécanisme de changement de cellule brutal ou « Hard handover » : la MS stoppe son lien radio avec la première BS avant d'établir un lien radio avec la suivante.
- Mécanisme de changement de cellule doux ou « Soft handover » : Ce handover est bien plus rapide que le hard handover, dans la mesure où la communication n'est pas coupée. La MS établit le lien avec la BS suivante avant de casser le lien précédent.

Les deux types de soft handover définis en 802.16e sont :

- La commutation rapide ou « Fast BS Switching (FBSS) » : Ce handover est rapide dans la mesure où il n'y a pas de procédure d'entrée complète à réaliser avec la nouvelle BS.
- Macro Diversity HandOver (MDHO).

Les profils WiMAX mobiles n'imposent que le « hard handover ». Le FBSS et le MDHO sont optionnels. Le « handover » doit être réalisé dans un temps d'environ 100ms. Dans le cadre de « soft handover », le pilotage d'antenne FESA est mis au service de la recherche d'une meilleure BS. La signalisation et éventuellement la synchronisation des BS entre elles, la connaissance des temps inutiles, c'est-à-dire les temps pendant lesquels la station n'est ni en train de recevoir ni en train d'émettre, donnent du temps pour la recherche de l'énergie dans les différents azimuts vers d'autres BS que la BS courante.
Cette connaissance des sources d'énergie alentours est intégrée à la recherche d'une meilleure station de base pour le soft handover.

**Mode « sleep/idle »**

Si une radio est en mode « sleep/idle », alors, en l'absence d'informations type GPS, le faisceau repris à la fin de la phase « sleep/idle »est le dernier utilisé ou une phase d'acquisition du meilleur angle de pointage recommence.

Si une radio est en mode « idle », alors, en l'absence d'informations type GPS lui indiquant la BS la plus proche, à chaque rendez-vous périodique avec le groupe de « paging » (défini lors de l'entrée en mode « idle » tel que décrit par la norme WiMAX) le faisceau repris est le dernier utilisé mais complété par une scrutation sur 360° pour confirmation de la meilleure direction vers la meilleure BS. Cette scrutation peut être effectuée quelques instants avant (dans les trames précédentes) le rendez-vous périodique avec le groupe de paging.

**FESA sur station de base BS**

Selon un mode de réalisation, une antenne FESA est utilisée sur une station de base et les étapes du procédé décrites ci-dessus s'appliquent. Dans les versions d'antennes FESA mono-faisceau, cela revient à doter une station de base d'un beamforming à un seul faisceau. Comme en beamforming, la BS-FESA vient adapter la direction de son faisceau à son correspondant pendant les slots de contention.

L'approche nominale de pointage consiste à venir balayer très rapidement avec un faisceau d'ouverture minimale (gain d'antenne maximum) l'ensemble des positions azimutales.

Pour la BS-FESA, une approche complémentaire par largeur de faisceau décroissante est proposée similaire à celle décrite à la figure 9.

Cette approche par largeur adaptative du faisceau (adaptabilité en gain d'antenne) est ici proposée sur la BS. Dans ce cas, l'ouverture maximale (diagramme omnidirectionnel) est affectée au début de la trame lors de la phase de signalisation à bas débit puis la largeur du lobe est affinée pour permettre un débit plus élevé au cours de la trame, ceci à condition de pointer correctement simultanément sur la BS et sur l'abonné considéré (par exemple avec une procédure du type : division par 2 de la largeur du lobe suivie d'une optimisation de la direction de pointage, division par 2 du lobe d'antenne et nouvelle optimisation de la direction de pointage, ...). La procédure est donc complémentaire et imbriquée avec celle du pointage.

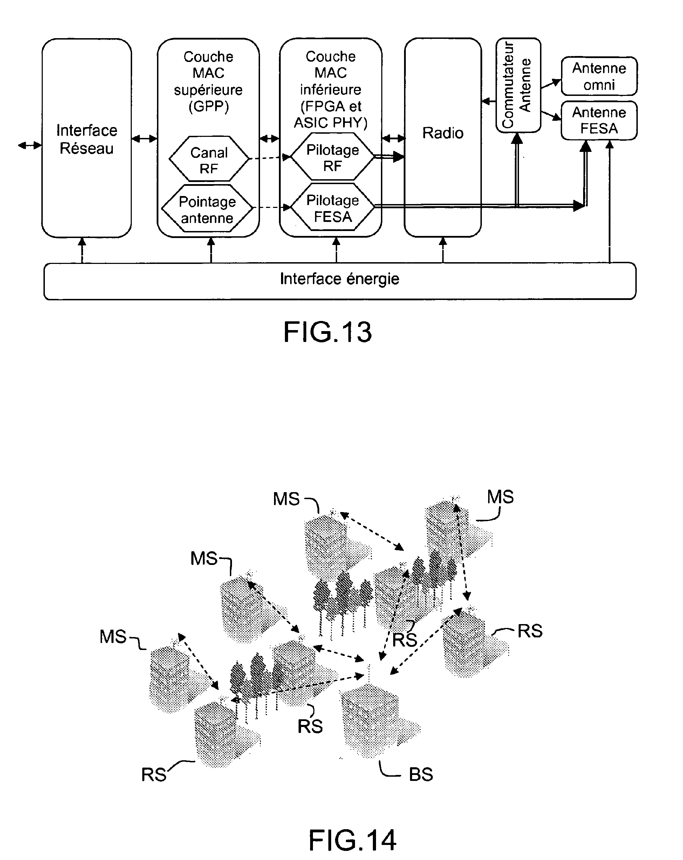

Dans le cas où une antenne FESA n'est pas capable de se configurer en un faisceau directionnel ou en omnidirectionnel, alors il est possible de lui adjoindre une antenne omnidirectionnelle. Dans ce cas le dispositif de pilotage de l'antenne FESA vient commander un commutateur de sélection antenne omni/ antenne FESA tel qu'il est représenté à la figure 13 .

Les figures 14, 15 et 16 décrivent le cas d'utilisation de stations relais.

Le 802.16j introduit des stations relais (RS) aux côtés des BS dans l'infrastructure. Ces RS visent à étendre la portée des stations de base.

Le mécanisme de pilotage de l'antenne FESA en station relais RS est similaire à celui d'une BS-FESA en ce sens que la RS, contrairement à une MS communique avec plusieurs stations au sein d'une même trame.

En effet, une station relais RS communique toujours :

• d'une part avec une station d'ordre supérieur, i.e. la station de base BS ou une RS qui la relaie à la BS,
• d'autre part avec les stations mobiles pour qui elle relaie les communications.

En outre, la recherche périodique de la meilleure topologie possible, implique que les RS considèrent les communications tous azimuts. Le mécanisme FESA en RS doit donc inclure cette fonctionnalité de découverte de topologie.

A chaque trame, compte tenu de la mobilité possible de l'ensemble des noeuds du réseau, la RS, comme la BS et les MS, élargit la largeur du faisceau ou vient affiner la direction du faisceau pour l'ensemble des positions nécessaires.

L'ajout d'un système de localisation type GPS permet d'enrichir l'algorithme de pilotage d'antenne.

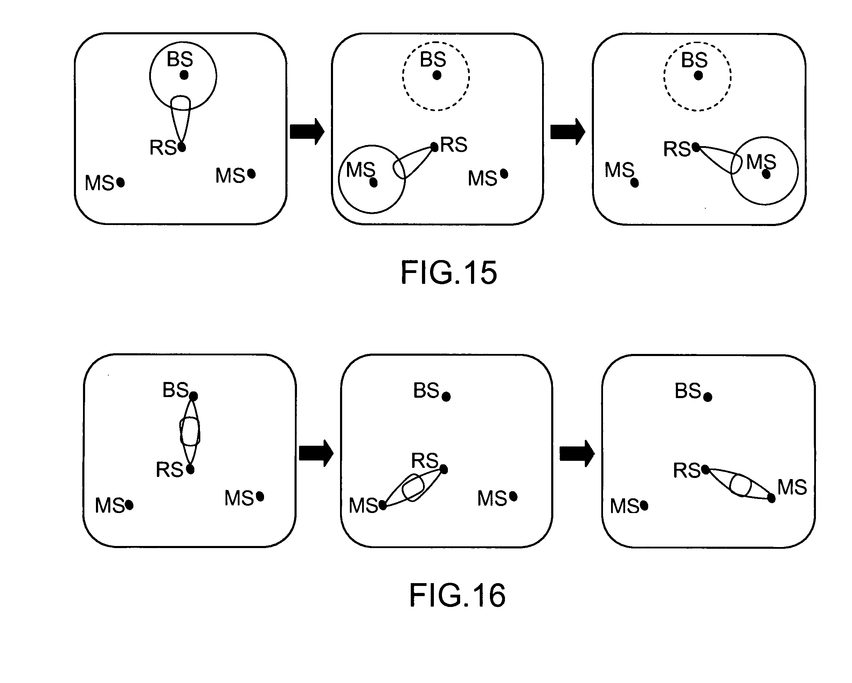

La figure 16 schématise les procédures FESA avec GPS. Le GPS peut être utilisé en tant qu'aide aux procédures FESA, dans la mesure où la propagation radio peut être différente de celle déduite d'un GPS (ex : obstacles).

**Revendications**

**1.** Procédé de mise en oeuvre d'une antenne intelligente au sein d'un réseau utilisant un protocole d'accès déterministe, une ou plusieurs stations mobiles (MS) et au moins une station de base (BS), les données transmises étant incluses dans une trame de données, comportant en combinaison au moins les étapes suivantes :

Lors de l'entrée d'une station mobile dans le réseau :

• Etape de synchronisation d'une station mobile (MS) équipée d'une antenne intelligente FESA ou Fast Electronically Steerable Antenna sur une émission de la station de base par changement de faisceau sur une durée au moins égale à une trame afin de pointer le faisceau directif en direction de la station de base (BS) pour obtenir la meilleure réception du signal,

• Etape de suivi de synchronisation de la station mobile sur l'émission de la station de base, et mise en oeuvre d'un algorithme de poursuite de pointage afin de conserver la meilleure réception du signal,

• Etape de détermination des paramètres de définition du lien descendant ou du lien montant par décodage des messages de signalisation contenus dans le message émis par la station de base,

• déclenchement d'une procédure d'entrée dans le réseau.

Une fois la station mobile (MS) entrée dans le réseau :

• La sélection d'un nouveau faisceau par l'algorithme de poursuite de pointage est basée sur un mécanisme avec hystérésis utilisant un filtrage linéaire précédé d'une étape de réjection par sauts ou utilisant directement un filtre non linéaire.

2. Procédé selon la revendication 1, **caractérisé en ce que** l'étape de synchronisation est effectuée avec une antenne FESA configurée en couverture omnidirectionnelle disposée du côté station mobile (MS) si le signal est suffisant.

3. Procédé selon la revendication 1, **caractérisé en ce que** l'étape de suivi de synchronisation comporte une étape de poursuite de pointage, après l'étape de synchronisation de la station mobile, le faisceau étant dirigé dans des directions successives ou voisines à l'intérieur de la trame et de trame en trame afin de conserver à tout instant la direction optimale.

4. Procédé selon la revendication 1, **caractérisé en ce qu'**il utilise en outre des informations de type GPS (Global Positioning System) afin de déterminer la meilleure position du faisceau en vérifiant que la connexion peut s'effectuer et en testant la direction et les directions directement adjacentes dans les périodes de liens descendant du canal de diffusion de la station de base (BS).

5. Procédé selon la revendication 1, **caractérisé en ce que** en l'absence de système de positionnement GPS (abréviation anglo-saxonne de Global Positioning System) dans une station mobile, le faisceau est positionné au départ sur une direction par défaut, **en ce qu'**un mécanisme de recherche trouve la direction la plus vraisemblable, c'est-à-dire en effectuant des mesures d'énergie, RSSI, ou de SNR sur 3 directions de pointage contiguës avec une directivité, gain d'antenne ou largeur de lobe, donnée : direction nominale k et directions adjacentes k-1 et k+1, les mesures de RSSI ou de SNR dans la direction k au cours du temps dans une trame ou sur plusieurs trames à des instants réguliers, et **en ce que** la direction du faisceau évolue en fonction d'un algorithme de poursuite consistant à suivre en permanence la meilleure direction.

6. Procédé selon la revendication 5, **caractérisé en ce que** le faisceau est élargi à chaque fin de trame, puis affiné par poursuite en début de trame suivante.

7. Procédé selon la revendication 1, **caractérisé en ce que** le filtre est un filtre de Kalman.

8. Procédé selon la revendication 1 ou 7, **caractérisé en ce qu'**il comporte une étape de poursuite comprenant un mécanisme d'hystérésis utilisant un filtrage linéaire précédé d'un algorithme de réjection non linéaire.

9. Procédé selon l'une des revendications précédentes, **caractérisé en ce que** l'algorithme de poursuite utilise une méthode de mesure de la puissance ou tenant compte des statistiques de codage de canal.

10. Procédé selon l'une des revendications précédentes, **caractérisé en ce que** l'algorithme de poursuite utilise une méthode de mesure de la puissance et du rapport signal à bruit SNR.

11. Procédé selon la revendication 1, **caractérisé en ce que** la procédure d'entrée est compatible des normes 802.16, 802.16d ou 802.16 e.

12. Procédé selon l'une des revendications précédentes, **caractérisé en ce que** la procédure de poursuite de la direction de pointage vers une station de base sert également pour rechercher les directions de pointage vers les stations de base adjacentes et faciliter l'étape de « Handover ».

13. Procédé selon l'une des revendications précédentes, **caractérisé en ce qu'**une station de base (BS) est équipée d'une antenne FESA et/ou une ou plusieurs stations relais (RS) sont équipées d'une antenne FESA.

14. Procédé selon l'une des revendications précédentes, **caractérisé en ce que** le réseau de communication est un réseau de type liaison point-multipoint.

15. Dispositif de pilotage d'une antenne intelligente FESA ou en anglo-saxon Fast Electronically Steerable Antenna dans un réseau de communication comprenant une interface réseau, une couche d'accès MAC ou Media Access Control, une interface énergie et un module radio, **caractérisé en ce que** la couche d'accès MAC comporte un module de pilotage FESA en liaison avec l'antenne FESA, un module de pilotage radio et **en ce que** ledit module de pilotage FESA et ledit module de pilotage radio sont adaptés à exécuter les étapes du procédé selon l'une des revendications 1 à 14.

16. Dispositif selon la revendication 15, **caractérisé en ce que** le module de pilotage de l'antenne FESA comprend un bus de pointage et d'adaptation du gain de l'antenne.

**Claims**

1. A method for implementing a smart antenna within a network that uses a deterministic access protocol, one or more mobile stations (MS) and at least one base station (BS), the transmitted data being included in a data frame, comprising in combination at least the following steps:

   on entry of a mobile station into the network:

   - a step of synchronising a mobile station (MS) that is fitted with a smart FESA antenna (Fast Electronically Steerable Antenna) with an emission from the base station by beam changing over a duration that is at least equal to a frame so as to point the directional beam towards the base station (BS) in order to obtain the best signal reception;
   - a step of tracking the synchronisation of the mobile station with the emission from the base station, and implementing a pointing tracking algorithm so as to retain the best signal reception;
   - a step of determining the parameters for defining the downlink or the uplink by decoding signalling messages contained in the message emitted by the base station;
   - a step of triggering a procedure for entering the network;

   once the mobile station (MS) has entered the network:

   - the selection of a new beam by the pointing tracking algorithm is based on a mechanism with hysteresis that uses linear filtering preceded by a rejection step by hopping or that directly uses a non-linear filter.

2. The method according to claim 1, **characterised in that** the synchronisation step is performed with an FESA that is configured in an omnidirectional coverage and is arranged on the mobile station (MS) side if the signal is sufficient.

3. The method according to claim 1, **characterised in that** the step of tracking the synchronisation comprises a pointing tracking step after the mobile station synchronisation step, the beam being directed in successive or adjacent directions within the frame and from frame to frame so as to retain the optimum direction at all times.

4. The method according to claim 1, **characterised in that** it further uses GPS (Global Positioning System) type information so as to determine the best position of the beam by verifying that the connection can be completed and by testing the direction and the directly adjacent directions in the downlink periods of the diffusion channel of the base station (BS).

5. The method according to claim 1, **characterised in that** in the absence of a GPS positioning system in a mobile station, the beam is positioned at the outset in a default direction, **in that** a search mechanism finds the most likely direction, that is by performing RSSI energy or SNR measurements on 3 contiguous pointing directions with a given directivity, antenna gain or lobe width: nominal direction k and adjacent directions k-1 and k+1, the RSSI or SNR measurements towards k in one frame over time or over several frames at regular times, and **in that** the direction of the beam evolves as a function of a tracking algorithm that consists in permanently monitoring the best direction.

6. The method according to claim 5, **characterised in that** the beam is widened at the end of each frame, then narrowed by tracking at the start of the next frame.

7. The method according to claim 1, **characterised in that** the filter is a Kalman filter.

8. The method according to claim 1 or 7, **characterised in that** it comprises a tracking step comprising an hysteresis mechanism that uses linear filtering preceded by a non-linear rejection algorithm.

9. The method according to any one of the preceding claims **characterised in that** the tracking algorithm uses a method that measures the power or that takes into account channel coding statistics.

10. The method according to any one of the preceding claims, **characterised in that** the tracking algorithm uses a method of measuring the power and the signal-to-noise ratio, SNR.

11. The method according to claim 1, **characterised in that** the entry procedure is compatible with standards 802.16, 802.16d or 802.16e.

12. The method according to any one of the preceding claims **characterised in that** the method for tracking the pointing direction towards a base station is also used to find the pointing directions towards the adjacent base stations and for facilitating the "handover" step.

13. The method according to any one of the preceding claims **characterised in that** a base station (BS) is fitted with an FESA and/or one or more relay stations (RS) are fitted with an FESA.

14. The method according to any one of the preceding claims **characterised in that** the communication network is a point-multipoint link type network.

15. A device for steering an intelligent FESA (Fast Electronically Steerable Antenna) in a communication network comprising a network interface, a MAC (Media Access Control) access layer, an energy interface and a radio module, **characterised in that** the MAC access layer comprises an FESA steering module that is linked with the FESA, a radio steering module and **in that** said FESA steering module and said radio steering module are designed to execute the steps of the method according to any one of claims 1 to 14.

16. The device according to claim 15, **characterised in that** the module for steering the FESA comprises a bus for pointing and adapting the gain of the antenna.

**Patentansprüche**

1. Verfahren zum Implementieren einer intelligenten Antenne im Innern eines Netzwerks, das ein deterministrisches Zugangsprotokoll verwendet, eine oder mehrere Mobilfunkstationen (MS) und wenigstens eine Basisstation (BS), wobei die übertragenen Daten in einen Datenframe einbezogen werden, das in Kombination wenigstens die folgenden Schritte beinhaltet:

beim Eintritt einer Mobilfunkstation in das Netzwerk:

- den Schritt des Synchronisierens einer Mobilfunkstation (MS), die mit einer intelligenten FESA (Fast Electronically Steerable Antenna) ausgestattet ist, mit einer Emission von der Basisstation durch Strahlenwechsel für eine Dauer, die wenigstens gleich einem Frame ist, um den gerichteten Strahl auf die Basisstation (BS) zu richten, um den besten Signalempfang zu erzielen;
- den Schritt des Verfolgens der Synchronisation der Mobilfunkstation mit der Emission von der Basisstation und Implementieren eines Ausrichtungsverfolgungsalgorithmus, um den besten Signalempfang beizubehalten;
- den Schritt des Ermittelns von Parametern zum Definieren der Downlink oder der Uplink durch Decodieren von Signalisierungsnachrichten, die in der von der Basisstation emittierten Nachricht enthalten sind;
- den Schritt des Auslösens einer Prozedur zum Eintreten in das Netzwerk;

nach dem Eintritt der Mobilfunkstation (MS) in das Netzwerk:

- Basieren der Auswahl eines neuen Strahls durch den Ausrichtungsverfolgungsalgorithmus auf einem Mechanismus mit Hysterese, der Linearfilterung nach einem Sprungrückweisungsschritt anwendet oder direkt ein nichtlineares Filter verwendet.

2. Verfahren nach Anspruch 1, **dadurch gekennzeichnet, dass** der Synchronisationsschritt mit einer FESA durchgeführt wird, die in einer omnidirektionalen Deckung konfiguriert und auf der Seite der Mobilfunkstation (MS) angeordnet ist, wenn das Signal ausreicht.

3. Verfahren nach Anspruch 1, **dadurch gekennzeichnet, dass** der Schritt des Verfolgens der Synchronisation einen Ausrichtungsverfolgungsschritt nach dem Mobilfunkstation-Synchronisationsschritt beinhaltet, wobei der Strahl in aufeinander folgenden oder benachbarten Richtungen innerhalb des Frame und von Frame zu Frame gerichtet wird, um stets die optimale Richtung beizubehalten.

4. Verfahren nach Anspruch 1, **dadurch gekennzeichnet, dass** es ferner Informationen des GPS-(Global Positioning System)-Typs benutzt, um die beste Position des Strahls durch Überprüfen, dass die Verbindung hergestellt werden kann, und durch Testen der Richtung und der direkt benachbarten Richtungen in den Downlink-Perioden des Diffusionskanals der Basisstation (BS) zu ermitteln.

5. Verfahren nach Anspruch 1, **dadurch gekennzeichnet, dass** in Abwesenheit eines GPS-(Global Positioning System)-Positionierungssystems in einer Mobilfunkstation der Strahl von Anfang an in eine Vorgaberichtung gebracht wird, wobei ein Suchmechanismus die wahrscheinlichste Richtung sucht, d.h. durch Durchführen von RSSI-Energie- oder SNR-Messungen an 3 zusammenhängenden Ausrichtungen mit einer gegebenen Direktivität, Antennenverstärkung oder Keulenbreite: Nennrichtung k und Nachbarrichtungen k-1 und k+1, die RSSI- oder SNR-Messungen in Richtung k über die Zeit in einem Frame oder über mehrere Frames zu regelmäßigen Zeitpunkten, und dadurch, dass die Richtung des Strahls in Abhängigkeit von einem Verfolgungsalgorithmus entsteht, der im permanenten Verfolgen der besten Richtung besteht.

6. Verfahren nach Anspruch 5, **dadurch gekennzeichnet, dass** der Strahl am Ende jedes Frame erweitert und dann durch Verfolgen zu Beginn des nächsten Frame verengt wird.

7. Verfahren nach Anspruch 1, **dadurch gekennzeichnet, dass** das Filter ein Kalman-Filter ist.

8. Verfahren nach Anspruch 1 oder 7, **dadurch gekennzeichnet, dass** es einen Verfolgungsschritt beinhaltet, der einen Hysterese mechanismus umfasst, der Linearfilterung nach einem nichtlinearen Rückweisungsalgorithmus anwendet.

9. Verfahren nach einem der vorherigen Ansprüche, **dadurch gekennzeichnet, dass** der Verfolgungsalgorithmus ein Verfahren benutzt, das Leistung misst oder Kanalcodierungsstatistiken berücksichtigt.

10. Verfahren nach einem der vorherigen Ansprüche, **dadurch gekennzeichnet, dass** der Verfolgungsalgorithmus ein Verfahren anwendet, das Leistung und das Signal-Rausch-Verhältnis (SNR) misst.

11. Verfahren nach Anspruch 1, **dadurch gekennzeichnet, dass** die Eintrittsprozedur mit den Standards 802.16, 802.16d oder 802.16e kompatibel ist.

12. Verfahren nach einem der vorherigen Ansprüche, **dadurch gekennzeichnet, dass** das Verfahren zum Verfolgen der Ausrichtung auf eine Basisstation auch zum Suchen der Ausrichtungen auf benachbarte Basisstationen und zum Erleichtern des "Handover"-Schrittes verwendet wird.

13. Verfahren nach einem der vorherigen Ansprüche, **dadurch gekennzeichnet, dass** eine Basisstation (BS) mit einer FESA ausgestattet ist und/oder eine oder mehrere Relais-Stationen (RS) mit einer FESA ausgestattet sind.

14. Verfahren nach einem der vorherigen Ansprüche, **dadurch gekennzeichnet, dass** das Kommunikationsnetz ein Punkt-zu-Mehrpunkt-Netzwerk ist.

15. Vorrichtung zum Lenken einer intelligenten FESA (Fast Electronically Steerable Antenna) in einem Kommunikationsnetzwerk, umfassend eine Netzwerkschnittstelle, eine MAC-(Media Access Control)-Zugangsschicht, eine Energieschnittstelle und ein Funkmodul, **dadurch gekennzeichnet, dass** die MAC-Zugangsschicht ein mit der FESA verbundenes FESA-Lenkmodul und ein Funklenkmodul umfasst, und dadurch, dass das FESA-Lenkmodul und das Funklenkmodul so ausgelegt sind, dass sie die Schritte des Verfahrens nach einem der Ansprüche 1 bis 14 ausführen.

16. Vorrichtung nach Anspruch 15, **dadurch gekennzeichnet, dass** das Modul zum Lenken der FESA einen Bus zum Ausrichten und Adaptieren der Verstärkung der Antenne umfasst.

BS

●

Pilotage RF

MS₁:
· synchro :OK,
· MAP :OK,
· débit :OK (nominal)

MS₂:
· synchro :OK,
· MAP :OK,
· débit :KO (insuffisant)

MS₃:
· synchro :OK,
· MAP :KO,
· débit :N/A

MS₄:
· synchro :KO

FIG.1

D(k)

## FIG.2

Entrée-sortie RF ⟷ Antenne

Bus de pointage et
d'adaptation du gain

Pilotage
FESA

Alimentation électrique

## FIG.3

FIG.4

FIG.5

Temps

FIG.6

Station de Base

Station Abonnée

FCH

Préambule

Cartes DL et UL

Créneaux DL

Créneaux UL

Plage

Liaison descendante

Liaison montante

## FIG.7

Interface Réseau

Couche MAC supérieure (GPP)

Canal RF

Pointage antenne

Couche MAC inférieure (FPGA et ASIC PHY)

Pilotage RF

Pilotage FESA

Radio

Antenne

## FIG.8

FIG.9

Zone A | Zone B | Zone C | Zone D | Zone E

FIG.10

| Zone A | Zone B | Zone C | Zone D |
|---|---|---|---|

BS · MS · BS · MS · BS · MS · BS · MS

| Préambule | MAPs compresses DL et UL | FCH | Sous carte DL et UL | Créneaux DL | Zone AAS disponible | Retour Rapide | Plage | Créneaux UL | Canal UL | Zone AAS disponible avec annulation des interférences |

← Liaison descendante →     ← Liaison montante →

**FIG.11**

M ↑

Mk

Mk-1

Mk+1

*L'écart entre les directions k et k-1 tourne à l'avantage de cette dernière*

Temps →

**FIG.12**

22

FIG.13

FIG.14

FIG.15

FIG.16

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• US 2005215261 A